(19) Europäisches Patentamt

European Patent Office

Office européen des brevets

(11) Veröffentlichungsnummer: **0 328 927 B1**

(12) **EUROPÄISCHE PATENTSCHRIFT**

(45) Veröffentlichungstag der Patentschrift:
04.09.91 Patentblatt 91/36

(51) Int. Cl.⁵: **B65G 69/28**

(21) Anmeldenummer: **89101601.6**

(22) Anmeldetag: **31.01.89**

(54) Überladebrücke für Rampen.

(30) Priorität: **19.02.88 DE 3805211**

(43) Veröffentlichungstag der Anmeldung:
**23.08.89 Patentblatt 89/34**

(45) Bekanntmachung des Hinweises auf die
Patenterteilung:
**04.09.91 Patentblatt 91/36**

(84) Benannte Vertragsstaaten:
**AT BE CH DE ES FR GB GR IT LI LU NL SE**

(56) Entgegenhaltungen:
**DE-A- 2 457 063**
**DE-A- 3 439 651**

(73) Patentinhaber: **Alten, Kurt**
**Ringstrasse 14**
**W-3015 Wennigsen (DE)**

(72) Erfinder: **Alten, Kurt**
**Ringstrasse 14**
**W-3015 Wennigsen (DE)**

(74) Vertreter: **Depmeyer, Lothar**
**Auf der Höchte 30**
**W-3008 Garbsen 1 (DE)**

㊼ Überladebrücke für Rampen.

EP 0 328 927 B1

## Beschreibung

Die Erfindung geht aus von einer Überladebrücke für Rampen mit einer an ihrem rampenseitigen Ende an der Rampe um eine waagerechte Achse verschwenkbaren Brückenplatte, die an ihrem freien Ende mit einer ein- und ausfahrbaren, zur Auflage auf der zu be- bzw- entladenden Plattform dienenden Verlängerung versehen ist, wobei die Brückenplatte seitlich von senkrechten Blechen begrenzt ist und die Verlängerung bei belasteter Überladebrücke ein an der Brückenplatte befindliches Widerlager unterfasst (DE-A-3439651).

Ein solches, sich im vorderen Bereich der Führungsmittel der Verlängerung wirksames Widerlager muss vorhanden sein, um ein Einknicken der Überladebrücke unter Last auszuschliessen. Bei bekannten Überladebrücken erfolgt eine solche Abstützung durch Unterfassen des die Brückenplatte nach oben abschliessenden Bleches, das meist als Riffelblech od. dgl. ausgeführt ist. Es versteht sich, dass ein solches Blech auch dann nur eine vergleichsweise kleine Steifigkeit hat, wenn es durch Profile versteift ist.

Der Erfindung liegt im wesentlichen die Aufgabe zugrunde, die eingangs erwähnten Überladebrücken so zu verbessern, dass deren Tragfähigkeit erheblich gesteigert werden kann.

Zur Lösung dieser Aufgabe ist erfindungsgemäss die Verlängerung an beiden seitlichen Rändern mit einem Vorsprung versehen, der ein an den Seitenblechen befestigtes oder von ihnen gebildetes, längs zur Brücke verlaufendes Widerlager unterfasst. Zweckmässigerweise befinden sich dabei die beiden Vorsprünge in der Nähe des senkrechten Teils der insg. etwa L-förmigen Verlängerung, um so eine Quersteifigkeit über die Breite der Verlängerung hinweg zu erreichen.

Diese sich über den Hub der Verlängerung erstreckenden Widerlager werden vorzugsweise von innen an den Seitenblechen befestigten, biegesteifen Flacheisen gebildet, gegen die sich die Vorsprünge von unten her anlegen können. Die Vorsprünge können dabei dem Hub der Verlängerung entsprechend an der Unterseite des Widerlagers entlanggleiten ; demgemäss sind die Widerlager auch bei allen Stellungen der Verlängerung wirksam. Ist die Verlängerung ganz ausgefahren, so befinden sich die Vorsprünge — vorzugsweise in Form von starken Zapfen — am vorderen Ende des Widerlagers, das sich im Regelfalle auch am vorderen Ende der Seitenbleche befindet.

Befindet sich die Überfahrbrücke bei ausgefahrener Verlängerung unter Last, so stützen sich die beiden Widerlager der Verlängerung von unten her an den Widerlagern ab, während sich die Verlängerung am hinteren Ende durch die dort meist vorgesehenen, nach hinten erstreckenden Längsträger von oben her auf einem Querträger abstützt, der die beiden Seitenbleche miteinander verbindet.

Eine solche Ausbildung der vorderen Brückenpartie führt zu einer wesentlichen Steigerung der Brückentragfähigkeit.

Weitere Einzelheiten der Erfindung werden anhand der Zeichnung erläutert, in der ein Ausführungsbeispiel der Erfindung dargestellt ist. Es zeigen :

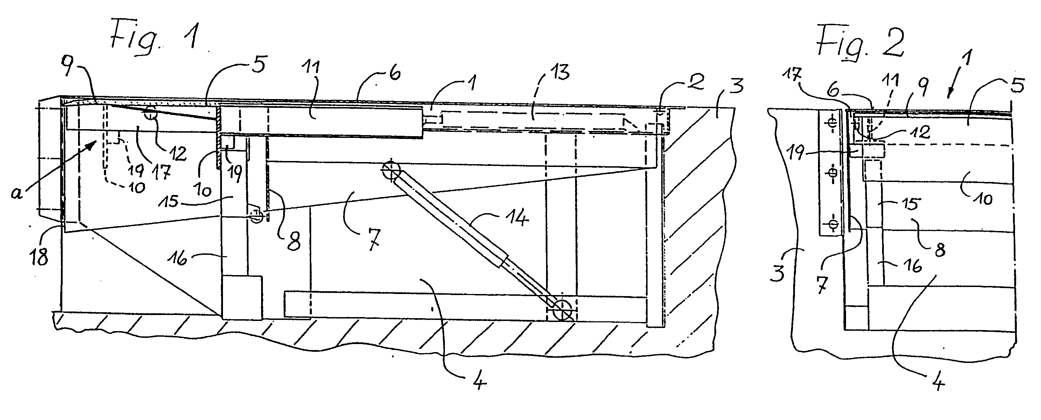

Fig. 1    einen Längsschnitt durch eine in Ruhestellung befindliche Überladebrücke und
Fig. 2    eine Teilstirnansicht der Brücke gemäss Fig. 1.

Die Brückenplatte 1 ist an ihrem rampenseitigen, hinteren Ende um eine waagerechte Achse 2 an der Rampe 3 gelagert ; dabei befindet sich die Überladebrücke in einer Ausnehmung 4 der Rampe 3 und schliesst in der Ruhestellung gemäss Zeichnung mit der Oberfläche mit der Rampenoberfläche ab und kann nach oben oder unten in die Ausnehmung 4 hinein verschwenkt werden. Am freien Ende der Brückenplatte 1 befindet sich eine in Längsrichtung der Brückenplatte 1 bewegbare, ein- und ausfahrbare Verlängerung 5, die im ausgefahrenen Zustand beim Betrieb der Überladebrücke auf der Plattform eines LKW od. dgl. aufliegt und dabei evtl. Höhenänderungen der Plattform folgen kann. Die Brückenplatte 1 weist oben eine durchgehende Stahlplatte 6 auf, die seitlich in senkrechte Seitenbleche 7 übergeht, die der Sicherheit und zur Befestigung eines einzelnen Querträgers 8 in Form eines aufrechtstehenden Stahlbleches hoher Festigkeit dienen. Die Verlängerung 5 besteht aus einem Auflageblech 9 und einem senkrecht dazu verlaufenden Schild 10, das sich am hinteren Ende des Auflagebleches 9 befindet. Ein Schrägblech dient der Versteifung. Hinten am Schild 10 sind zwei oder mehrere, sich nach hinten erstreckende, fest angebrachte Träger 11 angebracht, die die Aufgabe haben, die ausgefahrene Verlängerung 5 biegesteif mit der Brückenplatte 1 zu verbinden. Zudem liegt das Auflageblech 9 zum Verfahren der Verlängerung 5 auf seitlich angebrachten Rollen 12 auf. Das Verfahren der Verlängerung 5 erfolgt dabei mit einem Arbeitszylinder 13, während das Anheben der Brückenplatte 1 in üblicher Weise mit Hilfe eines oder mehrerer Hubzylinder 14 erfolgt.

Die Verlängerung 5 hat zudem an beiden Seiten eine Stütze 15, über die sich die Brückenplatte 1 in der Ruhestellung der Brücke auf einem Widerlager 16 in der Ausnehmung 4 abstützt. Ausserdem kann auch die Brückenplatte 1 etwa den längs verlaufenden Trägern 11 entsprechend mit längs verlaufenden Unterzügen in Form von Trägern ausgesteift sein.

2

An der Innenseite der beiden Seitenbleche 7 ist ein hochkant stehender, als Widerlager dienender Flachstahl 17 befestigt, der sich von der Vorderkante 18 der Seitenbleche 7 aus über die Hublänge der Verlängerung 5 nach hinten erstreckt. Weiterhin sind an der Unterseite der Träger 11 und an dem biegesteifen Schild 10 seitlich von der Verlängerung 5 abstehende als Vorsprünge wirkende Bolzen 19 befestigt, deren Oberkante praktisch mit der unteren Fläche der beiden Flachstähle 17 abschneidet. Die beiden Flachstähle 17 haben eine solche Erstreckung nach hinten, dass sich bereits im eingefahrenen Zustand der Verlängerung 5 gemäss Zeichnung die Bolzen 19 nahe unterhalb des Flachstahles 17 befinden.

Wird die Verlängerung 5 ausgefahren, so bewegen sich die beiden seitlich von der Verlängerung 5 abstehenden Bolzen 19 ebenfalls nach vorne. Vor Erreichen der vordersten Stellung der Verlängerung 5 nimmt der Bolzen 19 z.B. die Stellung bei a ein. In der völlig ausgefahrenen Stellung der Verlängerung 5 befindet sich der Bolzen 19 in der Nähe der Vorderkante 18 unterhalb des Flachstahles 17.

Erfolgt bei ausgefahrener Verlängerung 5 eine Belastung der Überladebrücke, so wird eine sehr feste, biegesteife Verbindung zwischen der Verlängerung 5 und der Brückenplatte 2 hergestellt, indem sich vorne an der Brückenplatte 1 die Bolzen 19 oben an der Unterseite des Flachstahles 17 und die Träger 11 unten an der Oberkante des Querträgers 8 abstützen. Das so bei der Belastung in die Verlängerung 5 eingeleitete Moment wird in dieser Weise vom vorderen Teil der Brückenplatte 1 aufgenommen. Wichtig ist hierbei, dass eine seitliche Kraftübertragung der Verlängerung in den vorderen Teil der Brückenplatte 1 deshalb möglich ist, weil die beiden seitlichen Bolzen 19 zusammen mit dem Schild 10 und auch mit dem Auflageblech 9 einen biegesteifen Träger bilden.

Der Flachstahl 17 bildet gegenüber dem Seitenblech 7 einen Vorsprung, während die beiden seitlich abstehenden Bolzen 19 Vorsprünge an der Verlängerung 5 sind. Die Länge des Flachstahles 17 entspricht zudem im wesentlichen der Länge des Auflagebleches 9, die die erforderliche Längsbewegung zum Ein- und Ausfahren bestimmt, welche die Verlangerung 5 vollziehen muss.

## Patentansprüche

1. Überladebrücke für Rampen (3) mit einer an ihrem hinteren, rampenseitigen Ende an der Rampe (3) um eine waagerechte Achse (2) verschwenkbaren Brückenplatte (1), die an ihrem freien Ende mit einer ein- und ausfahrbaren zur Auflage auf der zu be- bzw- entladenden Plattform dienenden Verlängerung (5) versehen ist, wobei die Brückenplatte (1) seitlich von senkrechten Blechen (7) begrenzt ist und die Verlängerung (5) bei belasteter Überladebrücke im Bereich des vorderen Endes der Brückenplatte (1) an dieser ein Widerlager unterfasst, dadurch gekennzeichnet, dass die Verlängerung (5) an beiden Seiten mit einem Vorsprung versehen ist, der ein an den Seitenblechen (7) befestigtes bzw. ein von diesen Blechen gebildetes, längs zur Brücke verlaufendes Widerlager unterfasst.

2. Brücke nach Anspruch 1, dadurch gekennzeichnet, dass sich die bolzenartigen Vorsprünge im Bereich des hinteren Endes eines Auflagebleches (9) der Verlängerung (5) befinden.

3. Brücke nach Anspruch 1 und 2, dadurch gekennzeichnet, dass die Vorsprünge (19) an einem am hinteren Ende des Auflagebleches befindlichen Schild (10) und/oder an diesem Schild befestigten Trägern (11) der Verlängerung (5) befestigt sind, die sich vom Schild aus nach hinten erstrecken.

4. Brücke nach Anspruch 1, dadurch gekennzeichnet, dass das Widerlager ein Flachstahl (17) ist.

5. Brücke nach Anspruch 1, dadurch gekennzeichnet, dass sich das Widerlager im wesentlichen über die Länge des Auflageteiles (9) der Verlängerung (5) von der vorderen Kante der Seitenbleche (7) aus nach hinten erstreckt.

6. Brücke nach Anspruch 1, dadurch gekennzeichnet, dass sich die Verlängerung (5) in bekannter Weise am hinteren Ende über längs verlaufende Träger (11) auf einem Querträger (8) abstützt, der von einem senkrecht hochstehenden Blech gebildet ist, dessen Enden mit den Seitenblechen (7) fest verbunden sind.

7. Brücke nach Anspruch 1, dadurch gekennzeichnet, dass sich zum Verfahren der Verlängerung (5) diese im vorderen Teil seitlich auf Rollen (12) abstützt, die innen am Widerlager befestigt sind.

8. Brücke nach Anspruch 5, dadurch gekennzeichnet, dass sich die Vorsprünge auch schon bei noch eingefahrener Verlängerung (5) im Bereich der Widerlager befinden.

9. Brücke nach Anspruch 4, dadurch gekennzeichnet, dass sich das Widerlager bis unter die die Brückenplatte (1) nach oben hin abschliessende Stahlplatte (6) erstreckt.

## Claims

1. A loading bridge for ramps (3) with a bridge plate (1), pivotable around a horizontal axis (2), at its end facing the ramp, said bridge plate being provided at its free end with an extensible and retractable extension (5) serving for placement on the platform to be loaded or unloaded, the bridge plate being laterally limited by vertical plates (7), and the extension (5), when the loading bridge is loaded, underpinning an abutment in the region of the forward end of the bridge plate (1) and thereon, characterised in that the extension (5) is provided on both sides with a projection which underpins an abutment attached to the side plates (7) or formed from these plates, and extending longitudinally to the bridge.

2. A bridge according to Claim 1, characterised in that the bolt-like projections are located in the vicinity of the rear end of a support plate (9) of the extension (5).

3. A bridge according to Claim 1 and 2, characterised in that the projections (19) are attached to a faceplate (10) located at the rear end of the support plate and/or to carriers (11) of the extension (5) attached to said faceplate (10), said carriers (11) extending backwards from the faceplate (10).

4. A bridge according to Claim 1, characterised in that the abutment is a flat steel bar (17).

5. A bridge according to Claim 1, characterised in that the abutment extends substantially from the forward edge of the side plates (7) backwards over the length of the support plate (9) of the extension (5).

6. A bridge according to Claim 1, characterised in that the extension (5) is supported in a known way at the rear end by longitudinally-extending carriers (11) on a transverse carrier (8) which is formed by a vertically-upright plate whose ends are rigidly attached to the side plates (7).

7. A bridge according to Claim 1, characterised in that, in order to transport the extension (5), it is laterally supported in the forward portion on rollers (12) which are attached on the interior to the abutment.

8. A bridge according to Claim 5, characterised in that the projections are located in the vicinity of the abutments even when the extension (5) is still retracted.

9. A bridge according to Claim 4, characterised in that the abutment extends under the steel plate (6) which closes the bridge plate (1) off at the top.

**Revendications**

1. Pont de transbordement pour des quais (3), comprenant un tablier de pont (1) qui, par son extrémité arrière située du côté du quai, peut basculer par rapport au quai (3) autour d'un axe (22) horizontal et qui est muni, à son extrémité libre, d'un prolongement (5) pouvant être escamoté et déployé et destiné à s'appuyer sur la plate-forme à charger et à décharger, le tablier de pont (1) étant délimité latéralement par des tôles (7) verticales, et le prolongement (5) tenant par en-dessous, lorsque le pont de transbordement est chargé, une butée située sur le tablier de pont (1), dans la région de l'extrémité avant de celui-ci, caractérisé en ce que le prolongement (5) est muni, des deux côtés, d'une partie saillante qui tient par en-dessous une butée s'étendant le long du pont et fixée aux tôles latérales (7) ou formée par ces tôles.

2. Pont suivant la revendication 1, caractérisé en ce que les parties saillantes en forme de tourillon se trouvent dans la région de l'extrémité arrière d'une tôle d'appui (9) du prolongement (5).

3. Pont suivant la revendication 1 ou 2, caractérisé en ce que les parties saillantes (19) sont fixées à un bouclier (10) se trouvant à l'extrémité arrière de la tôle d'appui et/ou à des poutrelles (11) du prolongement (5) qui sont fixées à ce bouclier et qui s'étendent vers l'arrière, à partir du bouclier.

4. Pont suivant la revendication 1, caractérisé en ce que la butée est un plat (17) en acier.

5. Pont suivant la revendication 1, caractérisé en ce que la butée s'étend sensiblement sur la longueur de la pièce d'appui (9) du prolongement (5), vers l'arrière à partir du bord avant des tôles latérales (7).

6. Pont suivant la revendication 1, caractérisé en ce que le prolongement (5) s'appuie, d'une manière en soi connue, à l'extrémité arrière par l'intermédiaire des poutrelles (11) s'étendant longitudinalement, sur une traverse (8) formée d'une tôle sur chant verticalement et dont les extrémités sont reliées rigidement aux tôles latérales (7).

7. Pont suivant la revendication 1, caractérisé en ce que, pour le déplacement du prolongement (5), celui-ci s'appuie dans la partie avant latéralement sur des galets (12) qui sont fixés à l'intérieur à la butée.

8. Pont suivant la revendication 5, caractérisé en ce que les parties saillantes se trouvent également, déjà lorsque le prolongement (5) est escamoté, dans la région de la butée.

9. Pont suivant la revendication 4, caractérisé en ce que la butée s'étend jusqu'en-dessous de la plaque (6) en acier fermant le tablier de pont (1) vers le haut.

Fig. 1

Fig. 2

EP 0 328 927 B1